# EUROPEAN PATENT APPLICATION

(11) **EP 4 501 183 A1**
(43) Date of publication of application: **05.02.2025**
(21) Application number: 24179239.9
(22) Date of filing: 31.05.2024
(51) Int. Cl.: A47J 36/02

(54) **MICROWAVE POPCORN MAKER WITH HEATING INSERT**

(30) Priority: 30.07.2023 US 202318227954
(71) Applicant: Dart Industries Inc., Orlando, Florida 32837 (US)
(72) Inventor: Vanrijckeghem, Tijs, Zaffelare (BE); Backaert, Dimitri M.C.J., Moorsel (BE); De Zutter, Bavo, De Pinte (BE); Salim, Iwan, Singapore (SG); Yee, Teo Sok, Singapore (SG); Keymeulen, Antoon, Aalst (BE); Vandaele, Ine M.K., Baardegem (BE); Schelfout, Sander, Aalst (BE); Wierinck, Michiel, Aalst (BE)
(74) Representative: Forresters IP LLP

(57) **Abstract**

A microwave popcorn maker with heating insert. The popcorn maker includes a main body in the form of a silicone cup. A removable plastic cover may close the open top end of the cup. A heating insert is located within the main body adjacent the base. The heating insert is formed of a material which absorbs microwave energy to heat faster than the material of the main body. The kernels for popping will rest upon the heating insert during heating in the microwave, and the increase heat absorption will result in improved popping performance.

## Description

### FIELD OF THE INVENTION

The present invention relates in general to devices for making popcorn in the home, and in particular those devices for use in microwave ovens.

### BACKGROUND OF THE INVENTION

It is common for homes to include microwave ovens for heating or preparing foods. One such food is popcorn. For many years it has been known to provide a single use prepackaged packet containing popcorn for preparation in the microwave. More recently, it is becoming popular to provide a reusable device for making popcorn in the microwave. These devices eliminate waste of the single-use packet and are considered more environmentally conscious. These devices also allow the user to determine their own ingredients, such as organic popcorn kernels which allow much greater choices by the user regarding health, local sourcing, flavoring, etc.

These reusable devices have taken one of two forms. The first is a glass container which is generally spherical but with a flat bottom for stability and an open top with removable cover. The second is a silicone receptacle in the general form of a cup, again with a removable cover. In both forms the user inserts kernels into the device, and then heats in the microwave to cause the popcorn to pop.

### SUMMARY OF THE INVENTION

An object of the present invention is to provide a microwave popcorn maker.

Another object of the present invention is to provide a popcorn maker with improved performance.

A further object of the present invention is to provide a popcorn maker including a heating insert for improved heating.

These and other objects are achieved by a microwave popcorn maker with heating insert. The popcorn maker includes a main body in the form of a silicone cup. A removable plastic cover may close the open top end of the cup. A heating insert is located within the main body adjacent the base. The heating insert is formed of a material which absorbs microwave energy to heat faster than the material of the main body. The kernels for popping will rest upon the heating insert during heating in the microwave, and the increase heat absorption will result in improved popping performance.
According to the present invention, there is provided a popcorn maker, comprising:
a main body having a base, and at least one sidewall extending upward from a periphery of said base, said at least one sidewall extending upward to an upper rim, said main body formed of a polymeric material;
a cover sized to rest upon said upper rim, and selectively removable therefrom; and
a heating insert mounted within said main body adjacent said base, said heating insert, said at least one sidewall, and said cover defining an inner chamber for heating food, wherein said heating insert is formed of a material which absorbs microwave energy and therefore heats faster, compared to said polymeric material.
Preferably, said polymeric material is silicone and said heating insert is formed of borosilicate glass.
Advantageously, the popcorn maker further includes means for securing said heating insert to said base.

### BRIEF DESCRIPTION OF THE DRAWINGS

The objects and features of the invention noted above are explained in more detail with reference to the drawings, in which like reference numerals denote like elements, and in which:
FIG. 1 is a top perspective view of the popcorn maker according to the present invention in the operative configuration;
FIG. 2 is a rear view of the popcorn maker;
FIG. 3 is an exploded top perspective view thereof;
FIG. 4 is a top view with cover removed to show interior details;
FIG. 5 is a bottom view;
Fig. 6 is a cross-sectional side view along line 6-6 of Fig. 1;
Fig. 7 is a cross-sectional side view along line 7-7 of Fig. 1;
Fig. 8 is a bottom view of the cover;
Fig. 9 is a bottom perspective view of the cover; and
Fig. 10 is a cross-sectional side view along line 6-6 of Fig. 1, with the popcorn maker in the collapsed configuration.

### DETAILED DESCRIPTION OF THE INVENTION

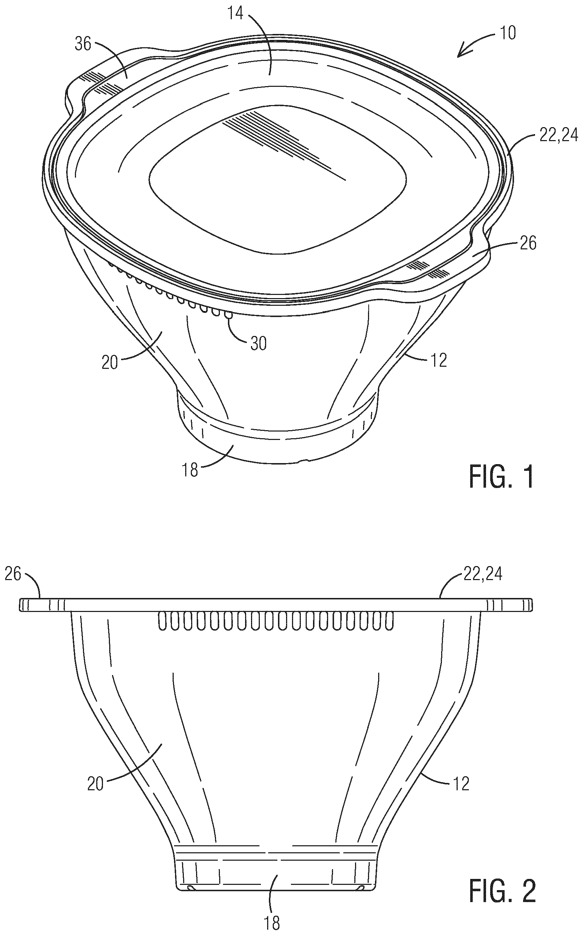

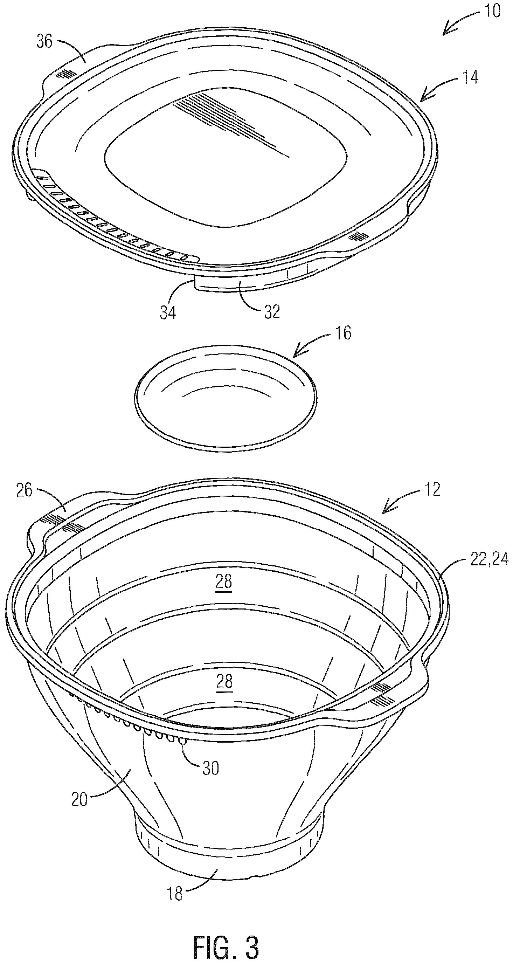

With reference to FIG. 1, a popcorn maker according to the present invention is generally designated by reference numeral 10. As best shown in Fig. 3, the popcorn maker 10 generally includes a main body 12, a cover 14, and a heating insert 16. These will be described more fully below.

The main body 12 takes the general form of a cup, with a base 18 having an outer periphery and one or more sidewalls 20 extending upward from the base 18 to an upper rim 22. In the preferred embodiment shown, the base is circular with a single side wall, but the base 18 may take a other geometric shapes having three or more sides, with a corresponding or similar number of sidewalls. These shapes may also be combined: in the embodiment shown the base 18 is round while the rim 22 is a rounded-corner square. It is also preferred that the sidewalls angle outward from the base such that the rim 22 is larger than base 18. This increases the volume of the main body (and thus the amount of food it may hold) and also makes the main body 12 easier to manually hold and carry.

The upper rim 22 may include a radially extending flange 24 for additional structural strength. Upper rim 22 may further include a pair of peripherally opposed grip handles 24 extending radially outward such as from flange 24. These grip handles 24 may be seen to also make it easier to manually carry the main body 12, but serve other purposes as described below. The upper rim 22 preferably includes a depression which is sized and shaped to receive the peripheral edge of the cover 16.

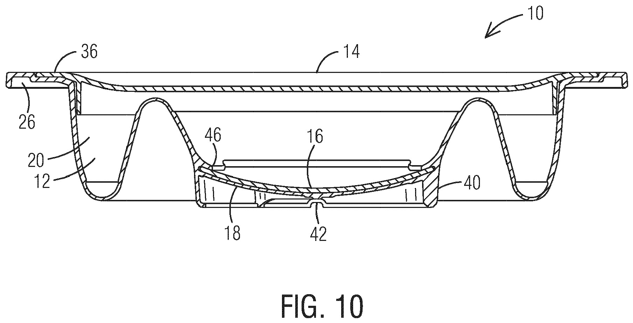

The main body 12 is preferably formed of one or more elastomeric materials. In the preferred form, it is a monolithic body of silicone. This is similar to prior art devices, and provides high resistance to heat, impermeability to water (from condensed steam), butter, oils, and the like. Silicone is also easy to clean, and is relatively insulative to heat. The flexibility of silicone require sufficient thickness to ensure structural stability (a self-supporting structure even while hot). However, the flexibility of silicone allows the main body to be vertically collapsible from an operative configuration shown in Figs. 1-7, and a collapsed configuration shown in Fig. 10. The collapsed configuration will allow easier storage, as is known in the prior art. The sidewall 20 may include one or more peripherally extending flex bands 28, each having reduced thickness (and therefore reduced structural strength and increased flexibility) to allow and guide the movement of main body 12 into and out of the collapsed configuration. While a relatively abrupt transition step for the reduced thickness flex bands 28 are shown for clarity, in practice it is preferred to have a smoother transition of place the step on the exterior of sidewall 20 for easier cleaning.

As illustrated in Fig. 3, the cover 14 may be mounted upon the main body 12 by resting the cover 14 on the upper rim 22. When mounted to the main body 12, the cover 14 will close the opening in the main body 12 formed by upper rim 22 and help create an inner chamber for holding the food (for example unpopped kernels or popped corn). As illustrated in Fig. 3, the cover 14 may be manually removed to access this inner chamber. The cover may be formed of a variety of materials, but a thermoplastic such as polypropylene is preferred.

It is intended that the cover 14 be in place during the heating of the popcorn maker 10, so as to prevent popping corn from exiting the main body 12. During this popping process, steam will be produced. To allow this steam to escape, it is preferred that one of the main body 12 or cover 14 include one or more apertures 30. It is also possible that each of the upper rim 22 and cover 14 include depressions which once aligned combine to form the apertures 30. In the preferred embodiment, the apertures 30 are located in the main body 12 just below the upper rim 22. As steam will exit the apertures, it is important to place the apertures 30 between the grip handles 26 to avoid steam contacting the user's hands.

In the preferred embodiment, it is preferred to allow these apertures 30 to be selectively closed. The apertures 30 should be open during the heating process, as noted, to allow steam to exit. However, after heating and removal from the microwave oven, it is also common to further treat the food within the inner chamber of the main body 12. For example, with popcorn it is common to add melted butter and salt immediately after popping. It is also becoming increasingly popular to add a variety of other flavorings (e.g., sweet cinnamon) or ingredients (e.g., chocolate) to popcorn after popping. In most of these situations, it is desirable to distribute the flavorings and/or ingredients throughout the food within the inner chamber. This is most naturally done by manually shaking the entire popcorn maker 10.

The apertures 30 are preferably formed with a sufficiently small size or diameter that the popped corn will not freely exit the main body 12 via an aperture 30 during the heating process when the kernels are energetically popping. During this shaking process, the apertures 30 would again prevent the egress of the popcorn. However, the added ingredients may be of a size or form (such as a powder or a liquid) such that the apertures 30 would allow undesired egress during shaking.

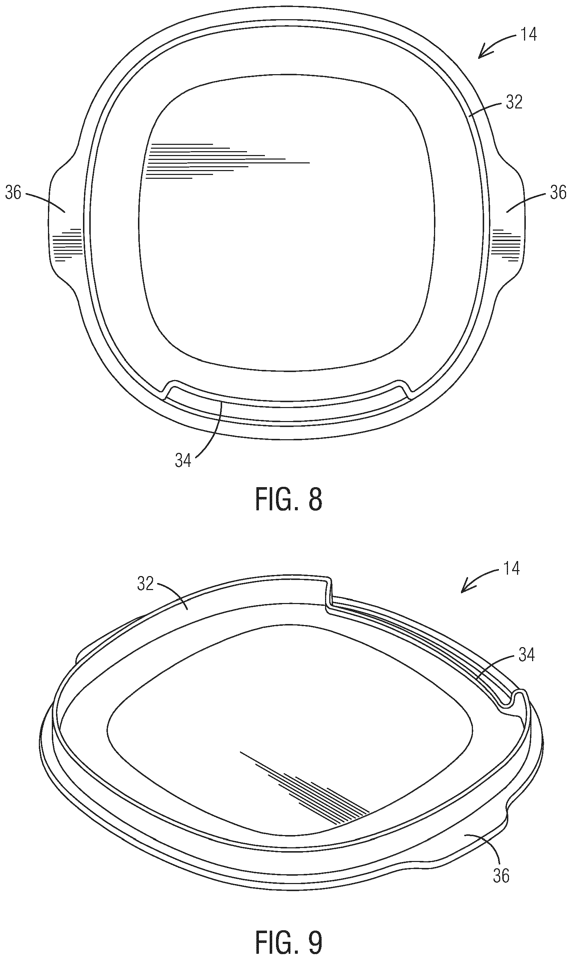

To allow this to be prevented, the cover 14 is formed with a partial skirt 32 extending downward from the lower face of cover 14, at a radial position to be closely adjacent (or touching) the inner face of sidewall 20, and with a vertical length sufficient to extend below and therefore block said apertures 30 when cover 14 rests upon the rim 22. In this way, the cover 14 may be placed to rest upon the upper rim 22 with the partial skirt 32 occluding the apertures 30. As best illustrated in Figs. 8 and 9, the partial skirt 32 is not continuous about the entire periphery of cover 14. Instead, the partial skirt 32 include a cutout 34 formed by a section of reduced vertical height, a section of reduced radial placement, or both. In the preferred embodiment, both are employed and it may be seen that cutout 34 is spaced radially inward relative to the remainder of partial skirt 32, and that cutout 34 has a reduced length compared to the remainder of partial skirt 32.

The cutout 34 is of a length to correspond with the apertures 30 such that when cutout 34 overlies the apertures 30 then the apertures 30 are not occluded. In this way, the cutout 34 may be selective enabled or disabled by appropriate clocking placement of the cover 14 on main body 12. This selective clocking may be achieved in a variety of ways, such as indicia on the cover to indicate the position of the cutout 34; a geometric shape of the upper rim and partial skirt 32 which force only two cover clocking positions, etc. In the embodiment shown, the upper rim 22 has the squared shape, and to achieve the desired close fit the partial skirt 32 has a similar squared shape. This would force clocking to one of four orientations. It is preferred, however, that the cover 14 includes two opposed and radially extending cover handles 36 intended to overlie the grip handles 26. When used accordingly, this limits the clocking orientations of cover 14 to two: apertures closed; and apertures open.

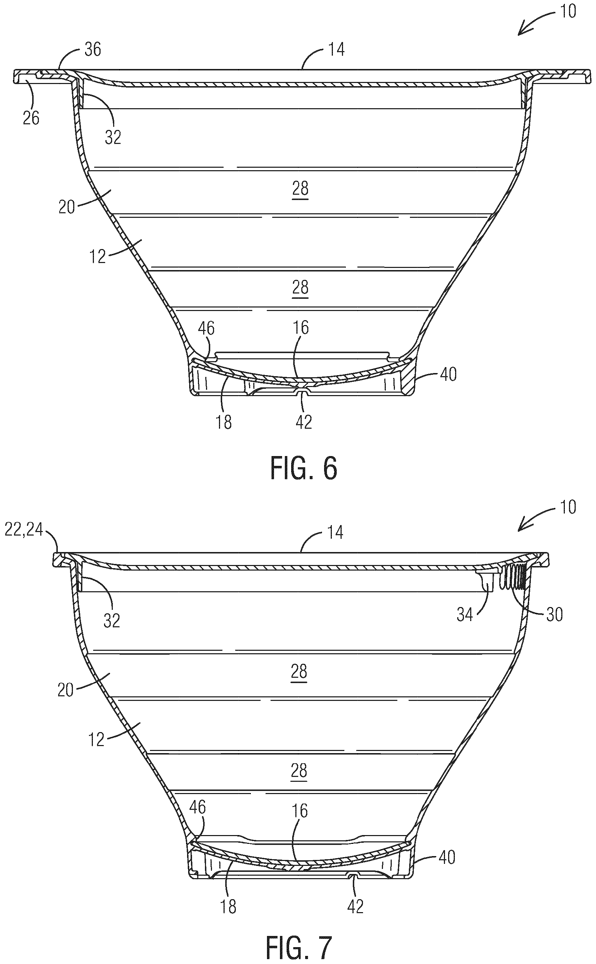

Figures 3 and 7 illustrate the apertures open position of cover 14. The cover 14 includes the indicia 38 noted above to illustrate the location of cutout 34. The user would thus orient the indicia 38 to overlie the apertures 30 when ready for heating. In the normal process, after heating the user would remove the cover after heating. If flavorings or additional ingredients are added to the food within the inner chamber, then the user would place the cover 14 back on the upper rim 22. This time, however, the cover would be oriented with the indicia 38 opposite (not overlying) the apertures 30. This would ensure the partial skirt 32 would occlude the apertures 30 during shaking.

This arrangement of apertures 30 and skirt 32 may be further improved. It is known in the art that not all kernels will pop during heating. The un-popped kernels are undesirable in that they are unpalatable yet are sometimes consumed due to being present with the popped popcorn. This may be solved or alleviated by forming the apertures 30 of a sufficiently small size to prevent egress of typical popped popcorn, but of a sufficiently large size to allow egress of un-popped kernels. An individual aperture diameter of approximately 10mm has been found acceptable for this. In this way the cover 14 may be placed in the aperture-open position during heating to allow steam venting. Then immediately after heating the entire popcorn maker 10 may be inverted and manually shaken. During this process the overlying positions of the grip handles 26 and cover handles 36 allow the cover to remain easily in place. With this inverted shaking the un-popped kernels will fall towards and then through the apertures 30. The popcorn maker 10 would then be un-inverted.

Once the desired shaking for removal or kernels (if employed) is complete, the cover 14 may be manually removed and set aside allowing the user to access the inner chamber. The food could then be seasoned and further shaken (apertures-closed) as described above. The cover 14 is then once again manually removed and set aside. The main body 12 could then be inverted to transfer the popped corn to a bowl for consumption. It is preferred, however, that the main body 12 be available for use as a serving bowl itself.

To allow use of the main body 12 as a serving bowl the main concern is the residual heat, as it is common to hold such a bowl directly on the lap of the user. To reduce heat transfer (and provide additional stability and mechanical strength) the base 18 is preferably includes a base skirt 40 which serves to space the base 18 from any support upon which the base skirt 40 rests (including the user's body). As may be seen, the base skirt 40 may include one or more notches 42 at the free end thereof. These notches 42 allow air to enter and thus preclude any reduced pressure from forming below the base 18 and within base skirt 40 (which could occur as the popcorn maker 10 cools in the microwave after heating). One or more apertures (not shown) extending through the base skirt 42 would serve equally well to equalize pressure.

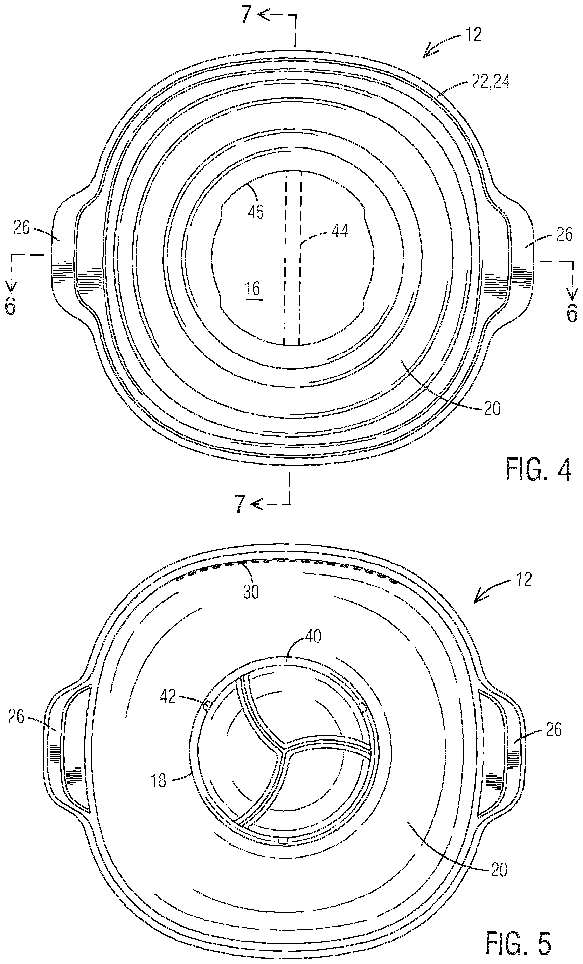

As best seen through comparison of Figs. 5 and 6, the base 18 may further include one or more base ribs extending downward from base 18 and radially outward to base skirt 42. These ribs work with base skirt 42 to prevent direct contact of the user with base 18.

A further aspect of the present invention is its most important. This improvement is the addition of the heating insert 16. While cup-shaped silicone receptacles with plastic covers are known in the prior art, the addition of the heating insert is believed a significant improvement.

The heating insert 16 is received within main body 12, adjacent base 18, to define the inner chamber together with sidewalls 20 and cover 14. In the embodiment shown, the heating insert 16 rests directly upon the base 18. This may be by full contact, or the base 18 may include one or more vent channels 44 (Fig. 4) in its upper surface to allow steam to pass from beneath the heating insert 16. While not specifically required, it is preferred that the heating insert 16 cover the inner face of the base 18 such that the periphery of the heating insert 16 coincides with the beginning of sidewall 20. For the preferred embodiment shown, this results in the heating insert 16 having a circular periphery. As may be envisioned, since the heating insert 16 overlies the base 18, the kernels intended to be heated will by gravity initially rest upon the heating insert 16 during heating.

The heating insert 16 is formed of a substance providing greater microwave heat absorption compared to the material of which the main body 12 is formed. The heating insert 16 may take a variety of forms. One option is a microwave-safe ceramic, possibly coated with enamel or other similar material. A further option for heating insert 16 is a block containing susceptor powder similar to that shown in US10,244,586B2 to Barea (with an appropriate food-contact-safe coating). The preferred material, however, is glass, and in particular borosilicate glass. The heating insert 16 is passive, but will absorb microwave energy during heating, thus serving to heat the kernels resting thereon. This is believe to increase the speed of popping, the percentage of kernels popped, and the repeatability of popping. By "repeatability of popping" it is meant the specific time and power setting an individual user has found provides optimal results for their particular microwave oven. The popping process can be quite specific: 4 minutes 20 seconds may give excellent results, while 4 minutes 30 seconds results in burnt odor. In particular, the heating insert 16 will absorb more microwave energy, and heat faster and hotter, compared to the material of the main body 12. As such, the present invention adding the heating insert 16 will heat faster, hotter, and thus pop faster, pop a greater percentage of kernels, and with greater repeatability of popping, compared to a prior art device with kernels resting directly upon the silicone base.

The presence alone of the heating insert 16 may improve performance; the shape of the heating insert 16 may further improve performance. While the heating insert 16 could be flat, it is preferred that it have a dished shape as shown in Figs. 6 and 7. The dished shape (concave upwards) is believed to operate in several ways. The dished shape forces the kernels toward the center of the heating element 16, and away from the sidewalls 20; thus more kernels are in contact with the heating insert 16 versus sidewall 20. The dished shape also focuses radiant heat inward (toward the massed kernels) more effectively than a flat shape.

As noted previously, it is common to shake and/or invert a popcorn maker during use. It is clear that simply resting the heating insert 16 within the main body 12 risk the heating insert 16 falling out. To this end, it is preferred that the popcorn maker 10 include means for securing the heating insert 16 to the base 18. This may take a variety of forms. The upper face of the base 18 could have a suction cup (not shown) integrally and monolithically formed thereon to engage the lower face of the heating insert 16. The heating insert 16 could be glued (not shown) to the base 18. In the preferred form shown, the sidewall 18 includes one or more locking ribs 46 extending radially inward to overlie the peripheral edge of the heating insert 16. When the main body 12 is formed as a monolithic silicone unit, the locking ribs 46 could also be monolithically formed, as shown in Figs. 6 and 7. While a plurality of discrete fingers could be used, the embodiment shown uses a single locking rib 46 extending about and overlying the entire periphery of the heating insert 16. As may be envisioned, the locking rib 46 will serve to elastically retain the heating insert 16 in place upon the base 18. The elastic nature of the silicone will, however, allow the user to remove the heating insert 16 for washing and replace it thereafter.

From the foregoing it will be seen that this invention is one well adapted to attain all ends and objects set forth above together with the other advantages which are inherent within its structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth of shown in the accompanying drawings is to be interpreted as illustrative, and not in a limiting sense.

## Claims

1. A popcorn maker, comprising:
a main body having a base, and at least one sidewall extending upward from a periphery of said base, said at least one sidewall extending upward to an upper rim, said main body formed of a polymeric material;
a cover sized to rest upon said upper rim, and selectively removable therefrom; and
a heating insert mounted within said main body adjacent said base, said heating insert, said at least one sidewall, and said cover defining an inner chamber for heating food, wherein said heating insert is formed of a material which absorbs microwave energy and therefore heats faster, compared to said polymeric material.

2. A popcorn maker as in Claim 1, wherein said polymeric material is silicone, and said heating insert is formed of borosilicate glass.

3. A popcorn maker as in Claim 1 or Claim 2, further including means for securing said heating insert to said base.
